# FASCICULE DE BREVET EUROPEEN

(11) **EP 1 353 511 B1**
(45) Date de publication et mention de la délivrance du brevet: **27.02.2013**
(21) Numéro de dépôt: 03100961.6
(22) Date de dépôt: 10.04.2003
(51) Int. Cl.: H04N 21/418, H04N 21/266, H04N 21/4623

(54) **Procédé de gestion de droits d'accès à des services de télévision**
Verwaltung der Zugriffsrechte für Fernsehservices
Access rights management process for television services

(30) Priorité: 12.04.2002 FR 0204657
(43) Date de publication de la demande: 15.10.2003
(73) Titulaire: SAGEMCOM BROADBAND SAS, 92500 Rueil Malmaison (FR)
(72) Inventeur: CHEVREUL, M. Jean-Jaques, 78360, Montesson (FR)
(74) Mandataire: Schmit, Christian Norbert Marie

(56) Documents cités:
- EP-A- 0 817 485
- US-A- 5 461 675
- US-A- 5 563 948

## Description

La présente invention a pour objet un procédé de gestion de droits d'accès à des services de télévision. Elle apporte une sécurité supplémentaire relative au contrôle des droits d'accès que possède effectivement un utilisateur de décodeur, permettant ainsi de lutter efficacement contre des techniques de piratage qui contournent frauduleusement les procédés de gestion de droits d'accès qui existent actuellement.

Le domaine de l'invention est, d'une façon générale, celui de la télévision numérique. Dans ce domaine, on associe le plus souvent au téléviseur un décodeur de télévision numérique. Ce dernier offre la possibilité à un abonné de recevoir une multitude de programmes, ou services, de télévision. L'abonné a préalablement acheté ou loué le décodeur à un opérateur de télévision, ou à un intermédiaire, et a souscrit un abonnement qui lui permet de recevoir en clair, c'est à dire de façon non cryptée, un ensemble de services de télévision. Cet ensemble de services dépend de la nature de l'abonnement que l'utilisateur a choisi, et il n'inclut pas nécessairement tous les services de télévision disponibles chez l'opérateur choisi.

En d'autres termes, lorsqu'un utilisateur choisit un abonnement, il achète un ensemble de droits d'accès qui lui autorise la réception en clair de certains services de télévision. Il est donc nécessaire de mettre en place des procédés de gestion de ces droits d'accès, afin de s'assurer d'une part qu'un abonné peut effectivement accéder aux services correspondant à son abonnement, et d'autre part, qu'il ne peut pas accéder aux services qui ne sont pas compris dans son abonnement.

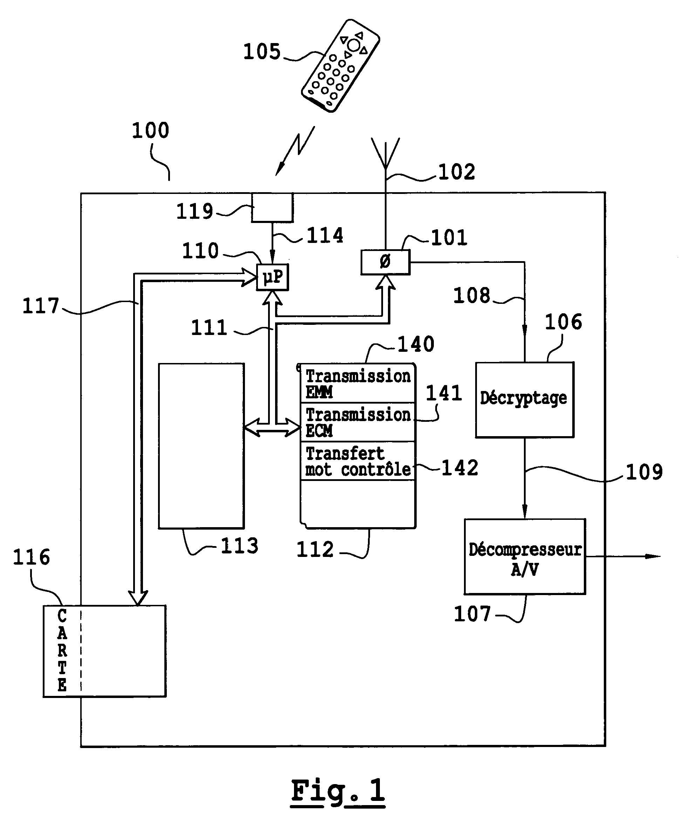

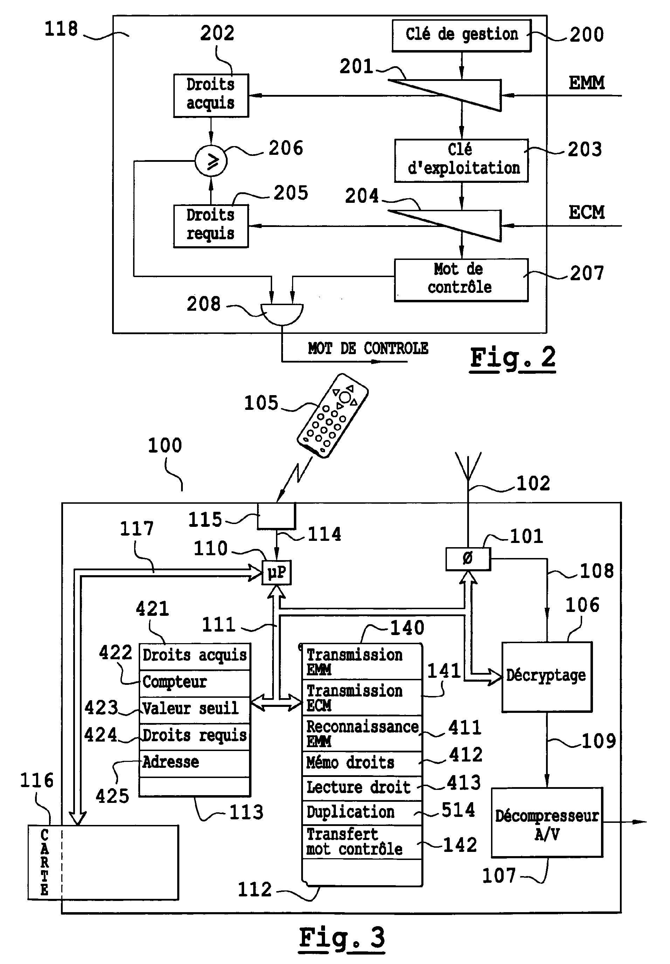

Les figures 1 et 2 illustrent de façon schématique le fonctionnement d'un décodeur de télévision, et plus particulièrement le système de gestion des droits d'accès utilisé dans l'état de la technique.

La figure 1 montre un décodeur 100 qui comporte un module de réception et de démultiplexage 101 de signaux télévisuels. Le module de réception 101 reçoit via une antenne 102 un flux d'informations de services de télévision. Le module de réception 101 pourrait être également connecté à un réseau de télévision câblée ou à un système de réception par satellite. Un microprocesseur 110 est relié au moyen d'un premier bus de communication bidirectionnel 111 à une mémoire de programmes 112, à une mémoire de données 113, au module de réception 101 et à un module de décryptage 106. Le microprocesseur 110 indique au module de réception 101 notamment quel service de télévision il doit extraire du flux d'informations qu'il reçoit par l'antenne 102.

Un capteur 115, dans cet exemple infrarouge, reçoit des signaux émis par une télécommande 105. Une cellule infrarouge du capteur 115 délivre un signal qui est transmis au microprocesseur 110. Les signaux numériques issus du module de réception et de démultiplexage 101 sont envoyés, via une première liaison unidirectionnelle 108 vers le module de décryptage 106, qui les transmet ensuite vers un décompresseur audio/vidéo 107 via une deuxième liaison unidirectionnelle 109.

La mémoire de données 113 est notamment destinée à mémoriser différentes informations, valeurs ou paramètres nécessaires au fonctionnement du décodeur. La mémoire de programmes 112 est notamment destinée à la gestion des différentes opérations qui peuvent intervenir pour mettre en oeuvre différentes fonctionnalités du décodeur. Elle comporte plusieurs applications, et pourra notamment en contenir certaines qui seront spécifiques à la mise en oeuvre du procédé selon l'invention. Ces applications seront détaillées par la suite .

Dans d'autres modes de réalisation du décodeur 100, ces applications pourraient être remplacées par des circuits électroniques spécifiques.

Le bus de communication bidirectionnel 111 véhicule des signaux de commande, d'adresse ou de données. Il s'agit d'une représentation fonctionnelle ; toutes les autres liaisons représentées sont, dans la pratique, des bus de données qui assurent des échanges de données entre deux éléments du décodeur décrit. Certaines de ces liaisons pourraient être intégrées dans le bus de communication bidirectionnel 111.

Dans le décodeur 100, on a prévu une ouverture pour introduire une carte 116, par exemple une carte de type carte à puce. Une telle carte comporte notamment un microprocesseur, une mémoire de données et une mémoire de programmes non représentés. Le décodeur est équipé d'une interface pour pouvoir échanger des informations avec la carte 116 via un deuxième bus de communication bidirectionnel 117. La carte 116 est un élément essentiel dans le fonctionnement de la gestion des droits d'accès aux services de télévision dans l'état de la technique. Un tel fonctionnement est détaillé à l'aide de la figure 2.

Sur cette figure, on a représenté les différentes opérations intervenant lors d'un contrôle de droit d'accès à un service de télévision particulier. Lorsque l'abonné possesseur du décodeur de télévision 100 a sélectionné un service particulier à recevoir, le module de réception 101 du décodeur se cale sur une fréquence correspondant à un flux de signaux dans lequel se trouvent les informations relatives au service sélectionné. Dans ce flux de signaux, on trouve notamment des composantes vidéo de ce service, des composantes audio du même service, ainsi que des composantes de fonctionnement qui comprennent par exemple des messages dits messages d'administration de droits, ou EMM (pour Entitlement Management Message en anglais), et aussi des messages dits messages de contrôle de droits, ou ECM (pour Entitlement Control Message en anglais).

D'une façon générale, les EMM sont des messages destinés au fonctionnement du décodeur, par exemple dans le cadre de fonctionnalités interactives. Certains de ces EMM sont des messages spécifiques qui sont destinés à la gestion des droits d'accès aux services de télévision. Ces messages sont appelés des messages de gestion de droit d'accès. Dans la suite de la description, par soucis de simplification, lorsque le terme EMM sera employé, il désignera toujours un message de gestion de droits d'accès, à moins que le contraire ne soit explicitement mentionné. D'une façon générale, les EMM peuvent notamment véhiculer soit des informations cryptées relatives aux droits, soit des informations non cryptées relatives aux droits, ces informations étant alors accompagnées d'une redondance cryptologique. Les ECM, pour leur part, seront désignés comme des messages de contrôle d'accès au service particulier. Un ECM est toujours associé à un service qui lui est propre.

Dans l'état de la technique, une application 140 de la mémoire de programmes 112, dite application de transmission des EMM, transmet directement les EMM à la carte 116, sans avoir interprété ou exploité les droits contenus dans ces EMM. A cet effet, une adresse spécifique de la carte 116 a été repérée dans l'EMM pour ne transmettre à la carte que les EMM qui lui sont effectivement destinés. Cette adresse est fournie par la carte 116 lors de la mise sous tension du décodeur 100 et lors de chaque nouvelle introduction de la carte 116 dans le décodeur. Par ailleurs, une application 141 de la mémoire de programmes 112, dite application de transmission des ECM, transmet directement les ECM à la carte 116, en général sans avoir exploité ou interprété le contenu de ces ECM.

Chaque carte 116 comporte au moins une clé de gestion 200, mais le plus souvent plusieurs clés repérées par un index. Une clé de gestion 200 est permanente ou semi-permanente. Certains opérateurs prévoient la possibilité de faire évoluer cette clé dans des circonstances bien particulières, par exemple dans les cas où elle aurait été compromise. L'accès à cette clé est en principe difficile pour les fraudeurs. La clé de gestion est commune à un groupe restreint d'abonnés, typiquement 256.

Lorsqu'un EMM est transmis à la carte 116, un premier algorithme de décryptage 201 permet, au moyen de la clé de gestion 200, d'acquérir des droits. Les droits ainsi obtenus constituent une première liste de droits acquis 202. Le contenu de ces droits définit l'ensemble des services auxquels l'abonné peut avoir accès. Par ailleurs, lorsqu'un certain type d'EMM est transmis à la carte, l'algorithme de décryptage 201, toujours au moyen de la clé de gestion 200, peut extraire de l'EMM reçu une clé d'exploitation 203. De telles clés sont transmises périodiquement par les opérateurs, la périodicité étant le plus souvent mensuelle ou semestrielle.

La clé d'exploitation 203 est utilisé par un deuxième algorithme de décryptage 204 pour exploiter et interpréter les ECM transmis à la carte 116. Les ECM sont transmis par les opérateurs, via le flux de signaux reçu au niveau de l'antenne 102, et sont spécifiques à chaque service de télévision. La périodicité de leurs changements est d'environ 10 secondes. Lorsqu'un ECM est reçu par la carte 116, l'algorithme de décryptage 204 permet d'obtenir une première liste de droits requis 205. Cette liste représente l'ensemble des droits que l'abonné doit posséder, et qui doivent donc être inscrits dans la première liste de droits acquis 202, pour pouvoir accéder au service particulier de façon non cryptée. Cette liste est effacée à la réception de chaque nouvel ECM pour pouvoir constituer une nouvelle première liste de droits requis 205. Par ailleurs, l'algorithme de décryptage 204 permet de décrypter l'ECM pour obtenir un mot de contrôle 207.

A chaque nouvel ECM reçu par la carte 116, une opération de comparaison 206 est effectuée entre la première liste de droits requis 205 et la première liste de droits acquis 202. Si la comparaison est satisfaisante, c'est à dire s'il s'avère que l'ensemble des droits requis de la première liste de droits requis 205 sont effectivement contenus dans la première liste de droits acquis 202, l'abonné a effectivement droit à l'accès au service particulier considéré. Dans ce cas, une information binaire appropriée est transmise à un circuit logique 208 qui autorise la transmission du mot d'accès au module de décryptage 106. Une application 142 de la mémoire de programmes 112, dite application de transfert du mot de contrôle, est utilisée pour effectuer cette transmission. Dans le cas contraire, si la comparaison n'est pas satisfaisante, l'information binaire transmise au circuit logique 208 bloque la transmission du mot de contrôle destiné au module de décryptage 106.

La clé de gestion 200, la clé d'exploitation 203, la première liste de droits acquis 202, la première liste de droits requis 205, et le mot de contrôle peuvent être mémorisés au moins temporairement dans la mémoire de données, précédemment mentionnée, de la carte 116. Les algorithmes de décryptage 201 et 204, la fonction de comparaison 206 et le circuit logique 208 peuvent correspondre à différentes applications de la mémoire de programmes, précédemment mentionnée, de la carte 116.

Une première méthode qui peut être utilisée pour contourner le procédé de contrôle d'accès qui vient d'être décrit est le suivant : les fraudeurs professionnels, qui ont eu accès par un moyen quelconque à une clé de gestion, parviennent à déchiffrer les différentes clés d'exploitation qui sont transmises. Ils fournissent alors à des utilisateurs fraudeurs de fausses cartes qui comportent tous les droits acquis, c'est à dire que la première liste de droits acquis a été préalablement programmée pour être la plus complète possible. Les fraudeurs professionnels diffusent alors régulièrement, par exemple via le réseau Internet, les différentes clés d'exploitation que les utilisateurs fraudeurs se chargent de programmer dans leur fausse carte. Ils ont alors accès illégalement à l'ensemble des services diffusés par un opérateur.

Dans ce système de fraude, les fausses carte n'ont pas besoin de posséder la clé de gestion car les fraudeurs utilisateurs possèdent d'ores et déjà l'ensemble des droits acquis et obtiennent les clés d'exploitation par une voie détournée frauduleuse. Par ailleurs, la diffusion de cartes comportant une clé de gestion, et qui permettrait donc une réception par voie normale des clés d'exploitation, n'est pas satisfaisante pour les fraudeurs : en effet, d'une part l'accès à ces clés de gestion est une opération coûteuse qui nécessite la mise en oeuvre de moyens importants et une clé de gestion n'étant spécifique qu'à un nombre restreint d'utilisateurs, il suffirait, pour un opérateur ayant détecté une utilisation frauduleuse d'une clé de gestion, de révoquer la clé en question pour annuler les importants efforts effectués par le fraudeur professionnel. D'autre part, la diffusion de telles carte pourrait faciliter les enquêtes visant à confondre les fraudeurs professionnels.

Une seconde méthode de fraude, ou les cartes officielles sont intégralement compromises, soit par mise à jour de secrets basiques communs à toutes les cartes de l'opérateur, soit par exploitation d'erreurs d'implémentation du logiciel de ces cartes, a également été observée. Dans cette seconde méthode de fraude, les fraudeurs professionnels peuvent avoir facilement accès à un grand nombre de clefs de gestion et peuvent donc diffuser des cartes pirates intégrant une ou plusieurs clefs de gestion, ou même encore les fraudeurs pourront, à l'aide d'un PC par exemple, charger eux-mêmes indûment, dans leurs cartes officielles, tous les droits qu'ils souhaitent avoir.

**On connaît dans l'état de la technique les documents D1 et D2, publiés respectivement sous le numéro** EP-A-0 817 485 **et** US-A-5 563 948**.**

Le procédé selon l'invention permet de lutter entre autres contre ces méthodes de fraude. Il permet essentiellement d'apporter une parade aux opérations frauduleuses évoquées en proposant un procédé amélioré de gestion des droits d'accès à des services de télévision. Dans le procédé selon l'invention, on procède à une duplication du contrôle des droits d'accès, une partie des opérations réalisées étant désormais effectuées au sein même du décodeur, et non plus uniquement dans la carte comme c'était le cas dans l'état de la technique. A cet effet, on prévoit notamment d'exploiter, au moyen d'applications spécifiques du décodeur de télévision, le contenu d'informations véhiculées dans les messages de type EMM ou ECM.

L'invention concerne donc un procédé de gestion de droits d'accès à des services de télévision au sein d'un décodeur de télévision pour empêcher l'utilisation de cartes frauduleuses, le décodeur pouvant recevoir une carte de gestion de droits, comportant les différentes étapes consistant à :
- recevoir différents services de télévision dans le décodeur sous forme d'un flux de signaux multiplexés transmis par un opérateur de télévision, ledit flux pouvant notamment comporter des composantes audio d'un service particulier, des composantes vidéo du service particulier et des composantes de fonctionnement parmi lesquelles on trouve notamment des messages de gestion de droits d'accès et des messages de contrôle d'accès au service particulier;
- interpréter, au sein de la carte de gestion des droits, les messages de gestion de droits d'accès pour produire une première liste de droits et la mémoriser dans une mémoire de la carte;
- interpréter, au sein de la carte de gestion des droits, les messages de contrôle d'accès au service particulier pour produire une première liste de droits requis et la mémoriser dans la mémoire de la carte;
- si la première liste de droits requis est comprise dans la première liste de droits acquis, produire, à partir des messages de gestion de droits d'accès et des messages de contrôle d'accès, des mots de contrôle permettant de décrypter les composantes audio et vidéo du service particulier;
caractérisé en ce que le procédé de gestion de droits d'accès comporte l'étape supplémentaire consistant à exploiter les messages de gestion de droits d'accès au sein même du décodeur pour éventuellement interdire l'accès au service particulier ou à tous les services.

Dans un mode de mise en oeuvre préféré de l'invention, l'étape d'exploitation des messages de gestion de droits d'accès pour éventuellement interdire l'accès au service particulier ou à tous les services comporte une opération de duplication, dans un module de mémoire du décodeur, d'au moins certains droits acquis de la première liste de droits acquis pour constituer une deuxième liste de droits acquis.

Dans un premier mode de mise en oeuvre du procédé selon l'invention, on prévoit l'étape consistant à transmettre, depuis l'opérateur de télévision, des messages tests de gestion de droit d'accès comportant des nouveaux droits, par exemple des droits virtuels, et on prévoit que l'étape d'exploitation des messages de gestion de droits d'accès pour éventuellement interdire l'accès au service particulier ou à tous les services peut comporter les différentes opérations consistant à :
- ajouter les nouveaux droits, ou des commandes associées à ces nouveaux droits, à la deuxième liste de droits acquis;
- comparer la première liste de droits acquis et la deuxième liste de droits acquis;
- si la deuxième liste de droits acquis comporte des nouveaux droits qui ne sont pas contenus dans la première liste de droits acquis, ou si les commandes associées à ces droits acquis sont en contradiction avec la première liste de droits acquis, mémoriser une situation de dysfonctionnement.

Par nouveaux droits, on désigne en fait une évolution des droits par rapport à une situation précédente ; un nouveau droit peut donc être un droit négatif, c'est à dire un droit faisant disparaître un droit qui était auparavant contenu dans la première liste de droits acquis. Suivant une caractéristique du système de contrôle d'accès déjà évoqué, les nouveaux droits sont soit transmis de façon non cryptée au décodeur, certains d'entre eux avec une redondance cryptologique erronée et un premier champ spécifique non crypté, destiné uniquement au décodeur, pour indiquer la non validité de la redondance cryptologique, soit les nouveaux droits sont transmis de façon cryptée au décodeur, mais avec un deuxième champ spécifique non crypté, destiné uniquement au décodeur, pour indiquer la commande associée au nouveau droit émis.

Lorsqu'un certain nombre, préalablement déterminé, de situations de dysfonctionnement se sont produites, le procédé selon l'invention prévoit de bloquer le fonctionnement du décodeur.

Dans un deuxième mode de mise en oeuvre du procédé selon l'invention, l'opération de duplication dans le module de mémoire du décodeur pour constituer la deuxième liste de droits acquis est effectuée pour la totalité des droits transmis dans les messages de gestion de droits d'accès. Dans ce cas, l'étape d'exploitation des messages de gestion de droits d'accès pour éventuellement interdire l'accès au service particulier ou à tous les services peut comporter les différentes opérations consistant à :
- comparer, au sein du décodeur, les droits requis pour l'accès au service particulier contenus dans les messages de contrôle d'accès au service particulier avec la deuxième liste de droits acquis;
- si l'ensemble des droits requis pour accéder au service particulier n'est pas contenu dans la deuxième liste de droits acquis, ne pas transmettre de mots de contrôle à un module de décryptage du décodeur.

Dans le deuxième mode de mise en oeuvre, on peut prévoir de mémoriser, par exemple dans une partie non volatile du module de mémoire du décodeur, une adresse de la carte ; cette étape de mémorisation peut être effectuée de façon irréversible soit lors de la fabrication du décodeur, soit suite à la réception d'un message de gestion de droits d'accès (EMM) particulier qui comporte une référence spécifique du décodeur (100), par exemple son numéro de série. Ce dernier cas étant mis en oeuvre lorsque les décodeurs sont déjà déployés chez les abonnés.

Le procédé selon l'invention peut être complété par des mesures destinées à protéger l'intégrité des contenus d'une mémoire de programmes et d'un module de données du décodeur vis à vis de modifications non autorisées par l'opérateur.

L'invention et ses différentes applications seront mieux comprises à la lecture de la description qui suit et à l'examen des figures qui l'accompagnent. Celles-ci ne sont présentées qu'à titre indicatif et nullement limitatif de l'invention. Les figures montrent :
- à la figure 1, déjà décrite, une représentation schématique d'un décodeur mettant en oeuvre la gestion des droits d'accès à des services de télévision dans l'état de la technique
- à la figure 2, également déjà décrite, une représentation schématique du fonctionnement de la carte de contrôle d'accès insérée dans un décodeur ;
- à la figure 3, une représentation schématique d'un décodeur mettant en oeuvre la gestion des droits d'accès à des services de télévision selon le procédé de l'invention;
- à la figure 4, un organigramme illustrant le fonctionnement du décodeur lors de la mise en oeuvre d'une première variante du procédé selon l'invention ;
- à la figure 5, un organigramme illustrant le fonctionnement du décodeur lors de la mise en oeuvre d'une deuxième variante du procédé selon l'invention.

Chaque élément du décodeur ou de la carte qui apparaîtrait sur plusieurs figures sera toujours désigné par la même référence.

La figure 3 illustre un décodeur de télévision permettant la mise en oeuvre du procédé selon l'invention. L'invention réside notamment dans l'utilisation qui est faite de nouvelles applications de la mémoire de programmes 112. Ces applications peuvent par exemple être téléchargées par des moyens connus dans les décodeurs déjà mis en circulation, ou bien être programmées dès la fabrication du décodeur. Chacune d'entre elles pourrait également être remplacée par un circuit électronique spécifique réalisant la même fonction.

Par soucis de simplification, la figure 3 montre notamment la mémoire de programmes 112 contenant l'ensemble des applications pouvant être mises en oeuvre selon l'un ou l'autre des principaux modes de mise en oeuvre de l'invention. Comme on le verra, certaines d'entre elles ne sont destinées qu'à un seul mode de mise en oeuvre, et pourraient donc être supprimées dans le cas où l'autre mode de mise en oeuvre serait choisi pour le procédé selon l'invention.

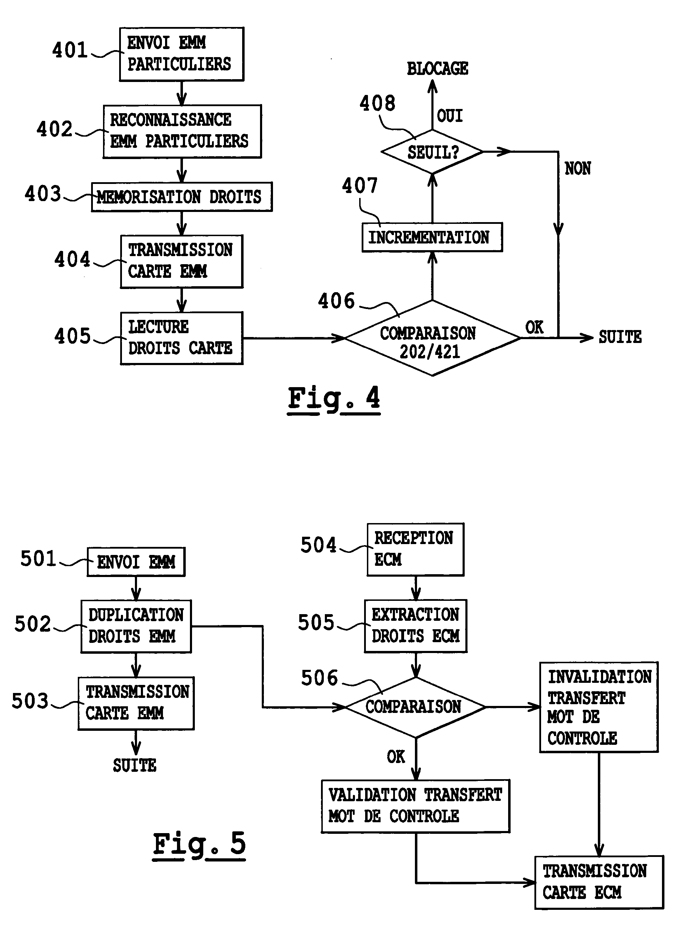

Dans le premier mode de mise en oeuvre, détaillé dans l'organigramme de la figure 4, on utilise des EMM particuliers, qui sont des EMM de test. Cette variante permet de détecter qu'un utilisateur utilise une fausse carte ne contenant pas de clés de gestion. Une première étape 401 consiste dans l'envoi de tels EMM par les opérateurs. Dès leur réception au sein du décodeur 100, une étape 402 de reconnaissance de ces EMM particuliers est mise en oeuvre dans une étape 403 au moyen d'une application, dite application de reconnaissance d'EMM 411, qui permet de détecter que ces EMM sont destinés à vérifier l'intégrité de la carte. Lorsque le décodeur reçoit un tel EMM, une application 412, dite application de mémorisation de droits, est automatiquement mise en oeuvre. Cette application permet de mémoriser, dans une zone réservée 421 de la mémoire de données 113, une information transmise en clair et relative au droit associé à l'EMM. La zone réservée 421 est de préférence une partie non volatile de la mémoire 113. L'information transmise et mémorisée peut être le droit en lui-même ou une instruction, ou commande, relative à ce droit, l'instruction pouvant consister en une indication sur l'activation ou la désactivation du droit en question, ou sur le fait que l'EMM comporte une redondance cryptologique erronée.

D'une façon générale, on peut considérer deux cas de figure : d'une part, si les EMM portent les droits acquis en clair, avec une redondance cryptologique, cette redondance pouvant être volontairement erronée pour certains EMM de test. Ainsi, seules les cartes légales, qui comportent les clés de gestion, pourront les distinguer et pourront donc ne pas les prendre en compte. Un champ en clair est ajouté dans les EMM de test ; il est destiné au décodeur pour indiquer le caractère erroné ou valide de la redondance cryptologique. Ce champ n'est pas transmis à la carte. D'autre part, si les EMM portent les droits sous forme chiffrée, les fausses cartes sont incapables de les interpréter, car elles n'ont pas de clés de gestion. Là aussi, un champ en clair est ajouté dans les EMM de test pour donner au seul décodeur l'information sur le droit transporté dans l'EMM. Ce champ en clair n'est pas transmis à la carte.

L'EMM est ensuite transmis dans une étape 404, sans l'information transmise en clair, au décodeur et mémorisée dans la zone réservée 421, vers la carte 116 au moyen de l'application de transmission d'EMM 140. Si la carte 116 est une carte qui comporte la clé de gestion 200, elle pourra faire évoluer la première liste de droits acquis 202 conformément à l'instruction de l'EMM transmise. Par contre, si la carte 116 est une fausse carte, qui ne comporte pas la clé de gestion 200, elle est incapable de faire évoluer la première liste de droits acquis 202 conformément à l'instruction de l'EMM transmise.

La première liste de droits acquis 202 est alors lue, dans une étape 405, au moyen d'une application 413 dite de lecture de droits, puis confrontée, dans une étape de comparaison 406, au contenu de la zone réservée 421 de la mémoire de données 113 contenant l'information relative au droit associé à l'EMM qui vient d'être transmis. Si la première liste de droits acquis 202 n'est pas en accord avec le contenu de cette mémoire, c'est à dire si les droits acquis n'ont pas suivi l'évolution que tendait à faire apparaître l'EMM de test, alors un dysfonctionnement est détecté.

Dans le cas de la détection d'un tel dysfonctionnement, un compteur 422, mémorisé dans la mémoire de données 113, de préférence non volatile, est incrémenté dans une étape 407. Sa valeur est alors comparée, dans une étape 408, à une valeur seuil 423 préalablement déterminée et mémorisée dans la mémoire de données 113. Si la valeur seuil 423 est atteinte le décodeur de télévision est définitivement bloqué. On interdit ainsi l'accès à tous les services de télévision. L'abonné supposé n'a pas d'autre solution que de contacter l'opérateur de télévision ou un intermédiaire légal. Sinon, les opérations se poursuivent conformément aux opérations qui se déroulent dans l'état de la technique, tout comme elles se poursuivent lorsque comparaison effectuée à l'étape 406 s'est avérée satisfaisante.

Les étapes 403 de mémorisation de droits, et 406 de comparaison, notamment, sont des étapes qui exploitent les messages de gestion de droits d'accès au sein même du décodeur, ceci pour éventuellement interdire l'accès au service particulier ou à tous les services.

Pour parer à l'affectation possible par les fraudeurs d'une adresse carte située en dehors du domaine exploité par l'opérateur, et qui ne recevraient donc pas d'EMM du tout, et en particulier pas d'EMM de test, le procédé prévoira un blocage du décodeur au cas où aucun EMM ne serait reçu sur une période de durée donnée, par exemple un mois.

Dans ce mode de mise en oeuvre, les EMM de tests qui sont utilisés transportent de préférence des informations relatives à des droits virtuels, c'est à dire à des droits qui ne sont jamais exploités par l'opérateur de télévision. Ainsi, l'exploitation, l'analyse de ces EMM qui vient d'être décrite ne risque pas de perturber le bon fonctionnement d'un décodeur utilisant des cartes légales.

Dans le deuxième mode de mise en oeuvre, détaillé dans l'organigramme de la figure 5, une première étape 501 consiste dans l'envoi des EMM habituels, normaux, par les opérateurs. Dès leur réception au sein du décodeur 100, une étape de duplication 502 des droits contenus dans les EMM est mise en oeuvre au moyen d'une application 514, dite application de duplication. Une deuxième liste de droits acquis est ainsi constituée et mémorisée dans la zone 421 non volatile de la mémoire de données 113. Comme dans l'état de la technique précédemment décrit, l'EMM est alors transmis, dans une étape 503, vers la carte 116 au moyen de l'application de transmission d'EMM 140. L'EMM y suivra les traitements habituels.

Dans ce mode de mise en oeuvre, lors de la réception de chaque ECM lors d'une étape 504, on procède, dans une étape 505, à une duplication des droits requis contenus dans chaque ECM. On constitue ainsi une deuxième liste de droits requis 424 qui est également mémorisée dans la mémoire de données 113. On confronte alors la deuxième liste de droits acquis 421 et la deuxième liste de droits requis 424 dans une étape 506 de comparaison. Si la deuxième liste de droits requis 424 n'est pas entièrement comprise dans la deuxième liste de droits acquis 421, alors un signal approprié est transmis à l'application 142 de transfert de mots de contrôle, pour que le mot de contrôle 207 ne soit pas transmis au module de décryptage 106. On interdit ainsi l'accès au service particulier associé à l'ECM reçu. Dans le cas contraire, un signal approprié est transmis à l'application 142 de transfert de mots de contrôle pour que le mot de contrôle 207 puisse être transmis au module de déchiffrement 106. L'ECM sera, dans tous les cas, ensuite transmis à la carte 116.

La présence d'une carte frauduleuse pourra être détectée lorsque la deuxième liste des droits requis 424 n'est pas entièrement comprise dans la deuxième liste des droits acquis 421 et que la carte renvoie un mot de contrôle plutôt qu'un message de refus d'accès. En effet, en cas de présence d'une carte non frauduleuse, cette dernière n'envoie pas de mot de contrôle lorsque les droits acquis ne permettent pas l'accès au service, mais envoie un message de refus d'accès. Cependant, dans le deuxième mode de mise en oeuvre, il n'est pas indispensable de détecter la présence d'une carte frauduleuse : en effet, le fonctionnement de la carte 116, qu'elle soit authentique ou frauduleuse, n'intervient pas dans la décision d'interdire l'accès à un service particulier.

Dans le deuxième mode de mise en oeuvre, il peut sembler opportun de réaliser une association irréversible (pairing) de la carte légale 116 avec le décodeur 100. En effet, le filtrage des EMM destinés à la carte est, dans l'état de l'art, réalisé par le décodeur à partir d'une adresse fournie par la carte, par exemple lors d'une mise sous tension du décodeur ou de chaque introduction de la carte. Une fausse carte pourrait alors indiquer une adresse correspondant à l'adresse d'une carte légale possédant tous les droits, et le décodeur mémoriserait ainsi une deuxième liste de droits acquis comportant effectivement tous les droits. Le pairing permet de répondre à cette éventualité.

Le pairing sera de préférence réalisé en fabrication, il pourra cependant être également réalisé après déploiement des décodeurs chez les abonnés lors du téléchargement d'une nouvelle version d'applications comportant, pour la première fois, le second mode de mise en oeuvre de l'invention. Cependant afin d'éviter que cette mémorisation d'adresse ne s'effectue sur une carte frauduleuse, il conviendra de l'effectuer à la réception d'un EMM particulier qui portera entre autre une information spécifique du décodeur lui même, comme son numéro de série par exemple, ce qui viendra authentifier ainsi l'adresse utilisée pour le filtrage des EMM. Ici encore pour parer à l'affectation possible par les fraudeurs d'une adresse carte située en dehors du domaine exploité par l'opérateur, et qui ne recevraient donc pas d'EMM du tout, et en particulier pas d'EMM de pairing, le procédé prévoira un blocage du décodeur au cas où l'EMM de pairing ne serait pas reçu sur une période de durée donnée, par exemple un mois, suivant ce téléchargement.

Dans les deux modes de mise en oeuvre, la présence de la carte 116 est toujours indispensable car elle seule peut produire les mots de contrôle 207. Les deux modes de mise en oeuvre proposent tous les deux une duplication de la gestion des droits d'accès, qui peut permettre la détection de l'usage de cartes frauduleuses.

L'exploitation de l'un ou l'autre de ces deux modes de mise en oeuvre de l'invention sera avantageusement accompagnée par la mise en place de mesures destinées à prévenir la modification du contenu des mémoires 112 et 113 du microprocesseur 110, par les fraudeurs : ces mesures peuvent notamment comprendre l'utilisation d'un logiciel de téléchargement sécurisé, de détecteurs d'ouverture du décodeur (Tamper évidence), d'un accès difficile ou impossible à certains signaux du microprocesseur 110 (notamment les signaux JTAG), ou encore d'un dispositif actif de contrôle d'intégrité mémoire.

## Revendications

1. Procédé de gestion de droits d'accès à des services de télévision au sein d'un décodeur (100) de télévision pour détecter une utilisation de carte frauduleuse , le décodeur (100) pouvant recevoir une carte (116) de gestion de droits, comportant les différentes étapes consistant à :
- recevoir différents services de télévision dans le décodeur (100) sous forme d'un flux de signaux multiplexés transmis par un opérateur de télévision, ledit flux pouvant notamment comporter des composantes audio d'un service particulier, des composantes vidéo du service particulier et des composantes de fonctionnement parmi lesquelles on trouve notamment des messages de gestion de droits d'accès (EMM) et des messages de contrôle d'accès au service particulier (ECM);
- interpréter, au sein de la carte (116) de gestion des droits, les messages de gestion de droits d'accès (EMM) pour produire une première liste de droits acquis (202) et la mémoriser dans une mémoire de la carte (116);
- interpréter, au sein de la carte (116) de gestion des droits, les messages de contrôle d'accès (ECM) au service particulier pour produire une première liste de droits requis (205) et la mémoriser dans la mémoire de la carte (116);
- si la première liste de droits requis (205) est comprise dans la première liste de droits acquis (202), produire, au sein de la carte (116), à partir des messages de gestion de droits d'accès (EMM) et des messages de contrôle d'accès (ECM), des mots de contrôle (207) permettant de décrypter les composantes audio et vidéo du service particulier;
**caractérisé en ce que** le procédé de gestion de droits d'accès comporte les différentes étapes supplémentaires consistant à :
- transmettre, depuis l'opérateur de télévision, des messages tests de gestion de droit d'accès (EMM) comportant de nouveaux droits, les **messages tests de gestion étant notamment transmis à la carte (116) pour constituer une première liste de droits acquis évoluée (202);**
- exploiter les messages de gestion de droits d'accès (EMM) au sein même du décodeur, ladite étape d'exploitation comportant les différentes opérations consistant à :
- dupliquer, dans un module de mémoire (113) du décodeur (100), au moins certains droits acquis de la première liste de droits acquis **évoluée** (202) pour constituer une deuxième liste de droits acquis (421) ;
- ajouter les nouveaux droits, ou des commandes associées à ces nouveaux droits, à la deuxième liste de droits acquis (421);
- comparer la première liste de droits acquis **évoluée** (202) et la deuxième liste de droits acquis (421);
- si la deuxième liste de droits acquis (421) comporte des nouveaux droits qui ne sont pas contenus dans la première liste de droits acquis **évoluée** (202), ou si les commandes associées à ces droits acquis sont en contradiction avec la première liste de droits acquis évoluée (202), mémoriser une situation de dysfonctionnement.

2. Procédé selon la revendication précédente **caractérisé en ce que** les nouveaux droits sont des droits virtuels.

3. Procédé selon l'une des revendications précédentes **caractérisé en ce que** les nouveaux droits sont transmis de façon non cryptée au décodeur (100), certains d'entre eux avec une redondance cryptologique erronée et un premier champ spécifique non crypté, destiné uniquement au décodeur, pour indiquer la non validité de la redondance cryptologique.

4. Procédé selon l'une des revendications 1 ou 2 **caractérisé en ce que** les nouveaux droits sont transmis de façon cryptée au décodeur (100), mais avec un deuxième champ spécifique non crypté, destiné uniquement au décodeur (100), pour indiquer la commande associée au nouveau droit émis.

5. Procédé selon l'une des revendications précédentes **caractérisé en ce qu'**il comporte l'étape supplémentaire consistant à, lorsqu'un certain nombre (423), préalablement déterminé, de situations de dysfonctionnement se sont produites, bloquer le fonctionnement du décodeur (100).

6. Procédé de gestion de droits d'accès à des services de télévision au sein d'un décodeur (100) de télévision pour empêcher l'utilisation de cartes frauduleuses, le décodeur (100) pouvant recevoir une carte (116) de gestion de droits, comportant les différentes étapes consistant à :
- recevoir différents services de télévision dans le décodeur (100) sous forme d'un flux de signaux multiplexés transmis par un opérateur de télévision, ledit flux pouvant notamment comporter des composantes audio d'un service particulier, des composantes vidéo du service particulier et des composantes de fonctionnement parmi lesquelles on trouve notamment des messages de gestion de droits d'accès (EMM) et des messages de contrôle d'accès au service particulier (ECM);
- interpréter, au sein de la carte (116) de gestion des droits, les messages de gestion de droits d'accès (EMM) pour produire une première liste de droits acquis (202) et la mémoriser dans une mémoire de la carte (116);
- interpréter, au sein de la carte (116) de gestion des droits, les messages de contrôle d'accès (ECM) au service particulier pour produire une première liste de droits requis (205) et la mémoriser dans la mémoire de la carte (116);
- si la première liste de droits requis (205) est comprise dans la première liste de droits acquis (202), produire, au sein de la carte (116), à partir des messages de gestion de droits d'accès (EMM) et des messages de contrôle d'accès (ECM), des mots de contrôle (207) permettant de décrypter les composantes audio et vidéo du service particulier;
**caractérisé en ce que** le procédé de gestion de droits d'accès comporte l'étape supplémentaire consistant à exploiter les messages de gestion de droits d'accès (EMM) au sein même du décodeur pour éventuellement interdire l'accès au service particulier ou à tous les services, ladite étape d'exploitation comportant les différentes étapes consistant à :
- constituer, dans un module de mémoire (113) du décodeur (100), **une deuxième liste de droits acquis (421) en mémorisant des droits contenus dans les messages de gestion de droits d'accès reçus (EMM);**
- comparer, au sein du décodeur (100), les droits requis pour l'accès au service particulier contenus dans les messages de contrôle d'accès (ECM) au service particulier avec la deuxième liste de droits acquis (421);
- si l'ensemble des droits requis pour accéder au service particulier n'est pas contenu dans la deuxième liste de droits acquis (421), ne pas transmettre de mots de contrôle (207) à un module de décryptage (106) du décodeur (100).

7. Procédé selon la revendication précédente **caractérisé en ce qu'**il comporte l'étape supplémentaire consistant à mémoriser, dans une partie non volatile du module de mémoire (113) du décodeur (100), une adresse (425) de la carte (116).

8. Procédé selon la revendication précédente **caractérisé en ce que** l'étape de mémorisation de l'adresse (425) de la carte (116) est effectuée de façon irréversible lors de la fabrication du décodeur (100).

9. Procédé selon la revendication 7 **caractérisé en ce que** l'étape de mémorisation de l'adresse (425) de la carte (116) est effectuée de façon irréversible suite à la réception d'un message de gestion de droits d'accès (EMM) particulier qui comporte une référence spécifique du décodeur (100), par exemple son numéro de série.

10. Procédé selon l'une des revendications précédentes **caractérisé en ce qu'**il est complété par des mesures destinées à protéger l'intégrité des contenus d'une mémoire de programmes (112) et d'un module de données (113) du décodeur (100) vis à vis de modifications non autorisées par l'opérateur

## Claims

1. A method for managing entitlement rights to television services within a set top box (100) for detecting the use of a fraudulent card, the set top box (100) being capable of receiving an entitlement management card (116), comprising the different steps of:
- receiving different television services within the set top box (100) in the form of a flow of multiplexed signals transmitted by a television operator, said flow in particular being capable of comprising the audio components of a specific service, the video components of the specific service and its operating components, including in particular entitlement management messages (EMM) and entitlement control messages (ECM) for the specific service;
- interpreting, within the entitlement management card (116), the entitlement management messages (EMM) to produce a first list of owned entitlements (202) and storing this list in a memory of the card (116);
- interpreting, within the entitlement management card (116), the entitlement control messages (ECM) for the specific service to produce a first list of required entitlements (205) and storing this list in the memory of the card (116);
- if the first list of required entitlements (205) is found in the first list of owned entitlements (202), producing, within the card (116), using the entitlement management messages (EMM) and entitlement control messages (ECM), control words (207) enabling the decryption of the audio and video components of the specific service;
**characterised in that** the entitlement management method comprises the different additional steps consisting in:
- transmitting, from the television operator, entitlement management test messages (EMM) comprising new entitlement rights, the management test messages being in particular transmitted to the card (116) to constitute a first list of modified owned entitlements (202);
- using the entitlement management messages (EMM) within the set top box itself, with said operating step comprising different operations consisting in:
- duplicating, in a memory module (113) of the set top box (100), at least some owned entitlements of the first list of modified owned entitlements (202) to constitute a second list of owned entitlements (421);
- adding new entitlements, or commands associated with these new entitlements, to the second list of owned entitlements (421);
- comparing the first list of modified owned entitlements (202) with the second list of owned entitlements (421);
- if the second list of owned entitlements (421) comprises new entitlements that are not contained in the first list of modified owned entitlements (202), or if the commands associated with these owned entitlements contradict the first list of modified owned entitlements (202), storing a malfunction situation in memory.

2. A method according to the previous claim, **characterised in that** the new entitlements are virtual entitlements.

3. A method according to one of the previous claims, **characterised in that** the new entitlements are transmitted in a non-encrypted manner to the set top box (100), some of the former with erroneous cryptologic redundancy and a first non-encrypted specific field, intended for the set top box only, to indicate the non-validity of the cryptologic redundancy.

4. A method according to one of claims 1 or 2, **characterised in that** the new entitlements are transmitted in an encrypted manner to the set top box (100), however with a second non-encrypted specific field, intended for the set top box (100) only, to indicate the command associated with the new entitlement issued.

5. A method according to one of the previous claims, **characterised in that** it comprises the additional step of, when a certain, previously determined number (423) of malfunction situations occur, blocking the operation of the set top box (100).

6. A method for managing entitlement rights to television services within a set top box (100) for preventing the use of fraudulent cards, the set top box (100) being capable of receiving an entitlement management card (116), comprising the different steps of:
- receiving different television services within the set top box (100) in the form of a flow of multiplexed signals transmitted by a television operator, said flow in particular being capable of comprising the audio components of a specific service, the video components of the specific service and its operating components, including in particular entitlement management messages (EMM) and entitlement control messages (ECM) for the specific service;
- interpreting, within the entitlement management card (116), the entitlement management messages (EMM) to produce a first list of owned entitlements (202) and storing this list in a memory of the card (116);
- interpreting, within the entitlement management card (116), the entitlement control messages (ECM) for the specific service to produce a first list of required entitlements (205) and storing this list in the memory of the card (116);
- if the first list of required entitlements (205) is found in the first list of owned entitlements (202), producing, within the card (116), using the entitlement management messages (EMM) and entitlement control messages (ECM), control words (207) enabling the decryption of the audio and video components of the specific service;
**characterised in that** the entitlement management method comprises the additional step of using the entitlement management messages (EMM) within the set top box itself to potentially forbid access to the specific service or to all services, said operating step comprising the different steps of:
- constituting, in a memory module (113) of the set top box (100), a second list of owned entitlements (421) by storing in memory the entitlements contained in the entitlement management messages (EMM) received;
- comparing, within the set top box (100), the entitlements required for access to the specific service contained in the entitlement control messages (ECM) for the specific service with the second list of owned entitlements (421);
- if all of the entitlements required to access the specific service are not contained in the second list of owned entitlements (421), not transmitting control words (207) to a decryption module (106) of the set top box (100).

7. A method according to the previous claim, **characterised in that** it comprises the additional step consisting in storing, in a non-volatile part of the memory module (113) of the set top box (100), an address (425) of the card (116).

8. A method according to the previous claim, **characterised in that** the step of storing the address (425) of the card (116) in memory is performed in an irreversible manner during the manufacture of the set top box (100).

9. A method according to claim 7, **characterised in that** the step of storing the address (425) of the card (116) in memory is performed in an irreversible manner following the receipt of a particular entitlement management message (EMM) comprising a specific reference for the set top box (100), for example its serial number.

10. A method according to one of the previous claims, **characterised in that** it is complemented by measures intended to protect the integrity of the content of a programme memory (112) and of a data module (113) of the set top box (100) with regard to modifications not authorised by the operator.

## Patentansprüche

1. Verfahren zum Verwalten von Zugriffsrechten auf Fernsehdienste innerhalb eines Fernsehdecoders (100) zum Erfassen der Verwendung einer betrügerischen Karte, wobei eine Karte (116) zum Verwalten der Rechte in den Decoder (100) eingeführt werden kann, und sich die Verwaltung der Rechte aus den folgenden Schritten zusammensetzt:
- aus dem Empfang verschiedener Fernsehdienste im Decoder (100) in Form eines Multiplex-Signalflusses, der von einem Fernsehnetzbetreiber übertragen wird, wobei der besagte Fluss vor allem Audiokomponenten eines besonderen Dienstes, Videokomponenten des besonderen Dienstes und Betriebskomponenten umfassen kann, unter denen man vor allem Nachrichten zum Verwalten von Zugriffsrechten (EMM) und Nachrichten zum Kontrollieren des Zugriffs auf den besonderen Dienst (ECM) vorfindet;
- aus dem Interpretieren der Nachrichten zum Verwalten von Zugriffsrechten (EMM) innerhalb der Karte (116) zum Verwalten der Rechte, zur Erstellung einer ersten Liste mit den erworbenen Rechten (202) und zu deren Ablage in einem Speicher der Karte;
- aus dem Interpretieren der Nachrichten zum Kontrollieren des Zugriffs auf den besonderen Dienst (ECM) innerhalb der Karte (116), zur Erstellung einer ersten Liste mit den benötigten Rechten (205) und zu deren Ablage in einem Speicher der Karte;
- wenn die erste Liste mit den benötigten Rechten (205) in der ersten Liste mit den erworbenen Rechten (202) enthalten ist, aus der Erstellung von Kontrollwörtern (207) innerhalb der Karte (116), ausgehend von den Nachrichten zum Verwalten von Zugriffsrechten (EMM) und den Nachrichten zum Kontrollieren des Zugriffs auf den besonderen Dienst (ECM), mit denen die Audio- und Videokomponenten des besonderen Dienstes entschlüsselt werden können;
**dadurch gekennzeichnet, dass** das Verfahren zum Verwalten von Zugriffsrechten die verschiedenen zusätzlichen Schritte umfasst, bestehend aus:
- der Übertragung vom Fernsehnetzbetreiber der Testnachrichten zum Verwalten von Zugriffsrechten (EMM), umfassend neue Rechte, wobei die Testnachrichten zur Verwaltung vor allem auf die Karte (116) übertragen werden, um eine erste veränderte Liste mit den erworbenen Rechten (202) zu erstellen;
- dem Auswerten der Nachrichten zum Verwalten von Zugriffsrechten (EMM) innerhalb des Decoders selbst, wobei der besagte Auswertungsschritt die verschiedenen Vorgänge umfasst, die aus den folgenden Schritten bestehen:
- aus dem Duplizieren zumindest einiger erworbener Rechte der veränderten ersten Liste der erworbenen Rechte (202) in einem Speichermodul (113) des Decoders (100), um eine zweite Liste mit den erworbenen Rechten (421) zu erstellen;
- aus dem Hinzufügen der neuen Rechte oder der Befehle, die diesen neuen Rechten zugeordnet sind, zur zweiten Liste mit den erworbenen Rechten (421);
- aus dem Vergleich der veränderten ersten Liste der erworbenen Rechte (202) mit der zweiten Liste der erworbenen Rechte (421);
- wenn die zweite Liste der erworbenen Rechte (421) neue Rechte umfasst, die nicht in der veränderten ersten Liste der erworbenen Rechte (202) enthalten sind, oder wenn die Befehle, die diesen neuen erworbenen Rechten zugeordnet sind, mit der veränderten ersten Liste der erworbenen Rechte (202) im Widerspruch stehen, aus dem Abspeichern einer Fehlfunktionssituation.

2. Verfahren nach dem vorherigen Anspruch, **dadurch gekennzeichnet, dass** die neuen Rechte virtuelle Rechte sind.

3. Verfahren nach einem der vorherigen Ansprüche, **dadurch gekennzeichnet, dass** die neuen Rechte dem Decoder (100) unverschlüsselt übertragen werden, einige von ihnen mit einer falschen kryptologischen Redundanz, sowie ein erstes unverschlüsseltes spezifisches Feld, das nur für den Decoder bestimmt ist, um die Ungültigkeit der kryptologischen Redundanz anzuzeigen.

4. Verfahren nach einem der Ansprüche 1 oder 2, **dadurch gekennzeichnet, dass** die neuen Rechte dem Decoder (100) verschlüsselt übertragen werden, jedoch mit einem zweiten unverschlüsselten spezifischen Feld, das nur für den Decoder (100) bestimmt ist, um den Befehl anzuzeigen, der dem neu ausgegebenen Recht zugeordnet ist.

5. Verfahren nach einem der vorherigen Ansprüche, **dadurch gekennzeichnet, dass** es den zusätzlichen Schritt umfasst, der darin besteht, dass der Betrieb des Decoders (100) blockiert wird, wenn eine zuvor bestimmte Anzahl (423) an Fehlfunktionssituationen aufgetreten ist.

6. Verfahren zum Verwalten von Zugriffsrechten auf Fernsehdienste innerhalb eines Fernsehdecoders (100) zum Verhindern der Verwendung von betrügerischen Karten, wobei eine Karte (116) zum Verwalten der Rechte in den Decoder (100) eingeführt werden kann, und sich die Verwaltung der Rechte aus den folgenden Schritten zusammensetzt:
- aus dem Empfang verschiedener Fernsehdienste im Decoder (100) in Form eines Multiplex-Signalflusses, der von einem Fernsehnetzbetreiber übertragen wird, wobei der besagte Fluss vor allem Audiokomponenten eines besonderen Dienstes, Videokomponenten des besonderen Dienstes und Betriebskomponenten umfassen kann, unter denen man vor allem Nachrichten zum Verwalten von Zugriffsrechten (EMM) und Nachrichten zum Kontrollieren des Zugriffs auf den besonderen Dienst (ECM) vorfindet;
- aus dem Interpretieren der Nachrichten zum Verwalten von Zugriffsrechten (EMM) innerhalb der Karte (116) zum Verwalten der Rechte, zur Erstellung einer ersten Liste mit den erworbenen Rechten (202) und zu deren Ablage in einem Speicher der Karte (116);
- aus dem Interpretieren der Nachrichten zum Kontrollieren des Zugriffs auf den besonderen Dienst (ECM) innerhalb der Karte (116) zum Verwalten der Rechte, zur Erstellung einer ersten Liste der benötigten Rechte (205) und zu deren Ablage in einem Speicher der Karte (116);
- wenn die erste Liste mit den benötigten Rechten (205) in der ersten Liste mit den erworbenen Rechten (202) enthalten ist, aus der Erstellung von Kontrollwörtern (207) innerhalb der Karte (116), ausgehend von den Nachrichten zum Verwalten von Zugriffsrechten (EMM) und den Nachrichten zum Kontrollieren des Zugriffs auf den besonderen Dienst (ECM), mit denen die Audio- und Videokomponenten des besonderen Dienstes entschlüsselt werden können;
**dadurch gekennzeichnet, dass** das Verfahren zum Verwalten von Zugriffsrechten den zusätzlichen Schritt umfasst, der darin besteht, die Nachrichten zum Verwalten von Zugriffsrechten (EMM) innerhalb des Decoders selbst auszuwerten, um eventuell den Zugriff auf den besonderen Dienst oder auf alle Dienste zu untersagen, wobei der besagte Auswertungsschritt verschiedene Schritte umfasst, bestehend aus:
- dem Erstellen einer zweiten Liste mit den erworbenen Rechten (421) in einem Speichermodul (113) des Decoders (100), durch das Speichern der Rechte, die in den empfangenen Nachrichten zum Verwalten von Zugriffsrechten (EMM) enthalten sind;
- dem Vergleich, innerhalb des Decoders (100), der benötigten Rechte für den Zugriff auf den besonderen Dienst, die in den Nachrichten zum Kontrollieren des Zugriffs auf den besonderen Dienst (ECM) enthalten sind, mit der zweiten Liste der erworbenen Rechte (421);
- wenn alle benötigten Rechte für den Zugriff auf den besonderen Dienst nicht in der zweiten Liste mit den erworbenen Rechten (421) enthalten sind, dem Nicht-Übertragen der Kontrollwörter (207) an ein Entschlüsselungsmodul (106) des Decoders (100).

7. Verfahren nach dem vorherigen Anspruch, **dadurch gekennzeichnet, dass** es den zusätzlichen Schritt umfasst, der darin besteht, eine Adresse (425) der Karte (116) in einem nicht flüchtigen Abschnitt des Speichermoduls (113) des Decoders (100) abzuspeichern.

8. Verfahren nach dem vorherigen Anspruch, **dadurch gekennzeichnet, dass** der Schritt zum Speichern der Adresse (425) der Karte (116) bei der Herstellung des Decoders (100) unumkehrbar erfolgt.

9. Verfahren nach Anspruch 7, **dadurch gekennzeichnet, dass** der Schritt zum Speichern der Adresse (425) der Karte (116) nach dem Empfang einer Sondernachricht zum Verwalten von Zugriffsrechten (EMM) unumkehrbar erfolgt, die eine spezifische Referenz des Decoders (100); wie beispielsweise dessen Seriennummer umfasst.

10. Verfahren nach einem der vorherigen Ansprüche, **dadurch gekennzeichnet, dass** es durch Maßnahmen vervollständigt wird, die dazu bestimmt sind, die Vollständigkeit der Inhalte eines Programmspeichers (112) und eines Datenmoduls (113) des Decoders (100) gegenüber Änderungen zu schützen, die vom Netzbetreiber nicht erlaubt werden.
